# EUROPEAN PATENT APPLICATION

(11) **EP 1 964 911 A2**
(43) Date of publication of application: **03.09.2008**
(21) Application number: 08101485.4
(22) Date of filing: 11.02.2008
(51) Int. Cl.: C10M 141/10, C10M 169/04, C10M 171/00

(54) **Methods for lubricating a transmission**

(30) Priority: 13.02.2007 US 674216
(71) Applicant: Infineum International Limited, Abingdon, Oxfordshire OX13 6BB (GB)
(72) Inventor: Watts, Raymond, Linden, NJ 07036 (US); Noles, Joe, Linden, NJ 07036 (US)
(74) Representative: Hart, Richard Joseph

(57) **Abstract**

The present invention discloses a method for lubricating a transmission having at least one electromechanical component and at least one mechanical component in a single housing. The method includes supplying a lubricant composition made up of (a) a base oil; (b) an oil soluble, phosphorus-containing compound; and (c) a corrosion inhibitor to the transmission.

## Description

### FIELD OF THE INVENTION

The present invention relates to methods for lubricating a transmission; particularly methods for lubricating transmissions having at least one electromechanical component and at least one mechanical component in a single housing.

### BACKGROUND OF THE INVENTION

The quest for vehicle fuel efficiency has lead to the development of hybrid vehicles by a number of automobile companies. As used herein the term "hybrid vehicle" refers to a vehicle having two means of propulsion, for example, (1) a combustion engine either gasoline or diesel fueled and (2) an electric motor receiving power from on-board batteries which are charged by engine (1) or by regenerative braking.

Hybrid vehicles can include conventional stepped automatic transmissions, continuously variable transmissions or other types of vehicle transmissions. One particular type of transmission for hybrid vehicles houses electromechanical components such as an electric drive motor and a generator with mechanical components such as speed reducing gearing in a single unit having a common lubricant charge. An example of the described transmission is an Electronically Controlled Variable Transmission used in Toyota hybrid vehicles (Toyota refers to such transmission as the "ECVT").

The present invention provides a method for lubricating transmissions having at least one electromechanical component and at least one mechanical component in a single housing comprising supplying a specific lubricant composition. Because the transmission includes electromechanical components and mechanical devices in a single unit, the lubricant composition of the invention must provide electrical insulation, lubrication and cooling to the unit.

### SUMMARY OF THE INVENTION

In a non-limiting embodiment, the present invention is a method for lubricating a transmission having at least one electromechanical component and at least one mechanical component comprising supplying to the transmission a lubricant composition comprising: (a) a base oil; (b) an oil soluble, phosphorus-containing material; and (c) a corrosion inhibitor.

In another non-limiting embodiment, the present invention is a lubricant composition comprising: (a) a base oil; (b) an oil soluble, phosphorus-containing material; and (c) a corrosion inhibitor, wherein the lubricant composition is used in a transmission having at least one electromechanical component and at least one mechanical component.

In another non-limiting embodiment, the present invention is a lubricant composition comprising: (a) a base oil; (b) an oil soluble, phosphorus-containing material; and (c) a corrosion inhibitor, wherein the lubricant composition is used in a transmission having at least one electromechanical component and at least one mechanical component.

In yet another non-limiting embodiment, the present invention is an additive package for a lubricant composition comprising: (a) an ashless dispersant; (b) an oil soluble, phosphorus-containing material; and (c) a corrosion inhibitor.

### DETAILED DESCRIPTION OF THE INVENTION

Unless otherwise indicated, all numbers expressing quantities of ingredients, reaction conditions, dimensions, physical characteristics, processing parameters, and the like, used in the specification and claims are to be understood as being modified in all instances by the term "about". Accordingly, unless indicated to the contrary, the numerical values set forth in the following specification and claims may vary depending upon the desired properties sought to be obtained by the present invention. At the very least, and not as an attempt to limit the application of the doctrine of equivalents to the scope of the claims, each numerical value should at least be construed in light of the number of reported significant digits and by applying ordinary rounding techniques. Moreover, all ranges disclosed herein are to be understood to encompass the beginning and ending range values and any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more and ending with a maximum value of 10 or less, e.g., 5.5 to 10. Any mentioning of a U.S. Patent or patent document or literature reference in the following description also incorporates by reference that document herein and is to be understood to be incorporated in its entirety.

The present invention is a method for lubricating a transmission. In a non-limiting embodiment, the present invention is a method for lubricating a transmission having at least one electromechanical component and at least one mechanical component in a single housing comprising supplying a lubricant composition to the transmission comprising: (a) a base oil; (b) an oil soluble, phosphorus-containing material; and (c) a corrosion inhibitor.

Examples of suitable mechanical components include, but are not limited to, (1) reduction gearing; (2) differentials; (3) power splitting devices; and (4) torque limiting devices. In a non-limiting embodiment, the differentials can be planetary, helical, spur or hypoid in design. In a non-limiting embodiment, the power splitting devices can be either mechanical (e.g. planetary gears) or frictionally operated (e.g. slipping wet clutches) or synchronizers. In a non-limiting embodiment, the torque limiting devices can be either mechanical (e.g. ratchet) or friction operated (e.g. slipping clutches). In non-limiting embodiments of the invention, one or more of the described mechanical components can be included.

Examples of suitable electromechanical components include, but are not limited to, (1) electric drive motors; (2) generators; (3) motor-generator combination units; and (4) alternators. In non-limiting embodiments of the invention, one or more of the described electromechanical components can be included. The following are not considered "electromechanical components" according to the present invention: fractional horsepower motors used to operate spool valves or perform other electromechanical actions normally classified as "servo motors" or "actuators" and solenoids which are used to perform mechanical functions.

In a non-limiting embodiment, the base oil has a purity represented by a dielectric breakdown voltage greater than or equal to 30 KV as measured in accordance with ASTM D877.

Suitable base oils include natural and synthetic lubricating oils of lubricating viscosity and mixtures thereof. Examples of natural oils useful in the present invention include, but are not limited to, (1) animal oils; (2) vegetable oils; and (3) mineral base oils. Suitable mineral base oils include liquid petroleum oils and solvent treated or acid-treated mineral base oils of the paraffinic, naphthenic or mixed paraffinic / napthenic types. The natural oils can be further refined by well known techniques such as hydrocracking and hydrofinishing.

Examples of synthetic base oils suitable for the present invention include, but are not limited to, the following: (1) hydrocarbon oils and halo-substituted hydrocarbon oils; (2) polyphenyls; (3) alkylated diphenyl ethers; (4) alkylene oxide polymers and interpolymers and derivatives thereof, in which the terminal hydroxyl groups may have been modified by esterification or etherification; (5) esters of dicarboxylic acids with a variety of alcohols, or esters made from C₅ to C₁₂ monocarboxylic acids and polyols or polyol ethers; (6) silicon based oils; and (7) the derivatives, analogs and homologues thereof. Examples of the hydrocarbon oils and halo-substituted hydrocarbon oils are polymerized and interpolymerized olefins also known as polyalpha olefins.

In a non-limiting embodiment of the invention, the natural or synthetic oils can unrefined, refined or rerefined oils. As used herein, "unrefined oils" are those obtained directly from a natural or synthetic source without further purification treatment. As used herein, "refined oils" are oils that have been further treated in one or more purification steps to improve one or more properties. For example, refined oils can be hydrogenated to improved stability against oxidation.

In non-limiting embodiments of the invention, the base oil can be a Group II oil, a Group III oil, or mixtures thereof. Group II and Group III oils are classifications established by the API Base Oil Interchangeability Guide-lines.

In a non-limiting embodiment of the invention, the base oil can be a Gas-To-Liquids (GTL) base oil derived from hydroisomerization of wax such as slack wax or Fischer-Tropsch synthesized wax as is well known in the art.

In another non-limiting embodiment of the invention, the base oil is comprised of at least 50 mass percent of synthetic lubricating oil.

In a non-limiting embodiment of the invention, the base oil contains a limited amount of water and any metals capable of conducting electricity, e.g. iron, copper, zinc, calcium, etc. For example, water can be present in the base oil in an amount less than or equal to 100 PPM, or less than or equal to 50 PPM. For example, metals capable of conducting electricity can be present in the base oil in an amount less than or equal to 10 PPM, or less than or equal to 5 PPM.

According to the present invention, the base oil can be present in an amount greater than 50 mass percent of the lubricant composition, for example, 75 to 95 mass percent of the composition.

According to the present invention, the lubricant composition comprises an oil soluble, phosphorus-containing material. Suitable phosphorus-containing compounds comprise an ester of an acid of phosphorus in a valence state of either III or V. In a non-limiting embodiment of the invention, the phosphorus-containing compound is a neutral compound, i.e. it does not contain acidic protons, such as, but not limited to, di-alkyl phosphites, tri-alkyl phosphites or tri-alkyl phosphates. According to the present invention, alkyl groups can be substituted or unsubstituted and also contain substituent hetero atoms, in addition to carbon and hydrogen, such as chlorine, sulfur, oxygen or nitrogen.

Suitable oil soluble, phosphorus-containing materials include alkyl phosphites, ashless dispersants post-treated with phosphorus acids and optionally boron.

Examples of alkyl phosphites which are useful in the present invention include di- and tri-alkyl phosphites as described in U.S. Patent No. 5,750,476 at column 5, lines 30-65.

In a non-limiting embodiment, the phosphites comprise trialkyl phosphites and triaryl phosphites. According to the present invention, aryl groups can be phenyl or substituted phenyl.

In another non-limiting embodiment of the invention, the oil soluble, phosphorus-containing material is a mixed thio-alkyl phosphate as described in U.S. Patent No. 5,185,090.

Examples of oil soluble, phosphorus-containing materials include those produced by post treating one or more ashless dispersant with acids or anhydrides of phosphorus, and optionally boron. A detailed description of the preparation of oil soluble, phosphorus-containing materials from ashless dispersants and their boronated analogs is contained in U.S. Patent Nos. 3,502,677 and 4,857,214. Suitable ashless dispersants include hydrocarbyl succinimides, hydrocarbyl succinamides, mixed ester amides of hydrocarbyl substituted succinic acid, hydroxyesters of hydrocarbyl substituted succinic acids, Mannich condensation products of hydrocarbyl substituted phenols, formaldehyde, polyamines as well as combinations and mixtures thereof.

In a non-limiting embodiment, the oil soluble, phosphorus containing material comprises an ashless dispersant comprised of polyisobutylene succinimides of polyamines such as tetraethylene pentamine which are post treated with sources of phosphorus and optionally boron. The polyisobutylene moieties can have molecular weights ranging from 300 to 3000. Suitable sources of phosphorus include inorganic phosphorus acids and anhydrides such as phosphorous acid, phosphoric acid, hypophosphoric acid, phosphorus trioxide, phosphorus tetraoxide, phosphoric anhydride. Suitable sources of phosphorus also include partial and total sulfur analogs of the inorganic phosphorus acids and anhydrides such as phosphorotetrathioc acid, phosphoromonothioc acid, phosphorodithioc acid and phosphorotrithioc acid.

In a non-limiting embodiment of the invention, the amount of phosphorus-containing material in the lubricant composition is less than or equal to 200 ppm, or less than or equal to 150 ppm, or less than or equal to 100 ppm.

According to the present invention, the lubricant composition comprises a corrosion inhibitor. Suitable corrosion inhibitors include triazoles, e.g. benzotriazole, tolytriazole, and aromatic triazoles. Suitable corrosion inhibitors also include materials based on thiadiazoles such as mercaptothiadiazoles. The corrosion inhibitor of the present invention can comprise combinations and mixtures of the above.

As referred to herein, aromatic triazoles have the following general structure:

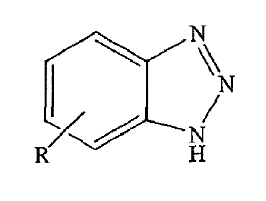

Where R is hydrogen or a hydrocarbyl group containing from 1 to 8 carbons. As shown above, the aromatic triazole is a substituted benzotriazole. Analogous aromatic materials which can be based on naphthalene and other aromatic structures are also encompassed by the present invention. In a non-limiting embodiment, the aromatic triazole is tolyl triazole or benzotriazole.

As referred to herein, mercaptothiadiazoles have the following general structure:

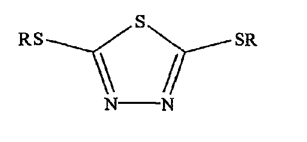

Where each R is (1) hydrogen or a hydrocarbyl group having from 1 to 30 carbon atoms, for example, from 6 to 15 carbons atoms or (2) a sulfur-containing group, R'S-, such as dihydrocarbyldithiothiadiazoles so that there can be a chain of two sulfur atoms linking the thiadiazole nucleus to the hydrocarbyl group. In a non-limiting embodiment of the invention, the mercaptothiadiazole is 2,5-bis-(tert-nonyldithio)-1,3,4-thiadiazole or a derivative of 2,5-dimercaptothiadiazoles ("DMTD") such as (a) 2-hydrocarbyldithio-5-mercapto-1,3,4-thiadiazole or 2,5-bis(hydrocarbyldithio)-1,3,4-thiadiazole and mixtures thereof; (b) carboxylic esters of DMTD; (c) condensation products of α-halogenated aliphatic monocarboxylic acids with DMTD; (d) reaction products of unsaturated cyclic hydrocarbons and unsaturated ketones with DMTD; (e) reaction products of an aldehyde and diaryl amine with DMTD; (f) amine salts of DMTD; (g) dithiocarbamate derivatives of DMTD; (h) reaction products of an aldehyde, and an alcohol or aromatic hydroxy compound, and DMTD; (i) reaction products of an aldehyde, a mercaptan, and DMTD; (j) 2-hydrocarbylthio-5-mercpato-1,3,4-thiadiazole; (k) products from combining an oil-soluble dispersant with DMTD; and mixtures thereof. Compositions (a) - (k) are known to those skilled in the art and are described in U.S. Patent No. 4,612,129 and patent references cited therein.

In a non-limiting embodiment of the invention, the corrosion inhibitor in the lubricant composition comprises both an aromatic triazole and a mercaptothiadiazole.

In a non-limiting embodiment of the invention, the corrosion inhibitor is present in an amount less than or equal to 0.5 mass percent or less than or equal to 0.2 mass percent of the lubricant composition.

According to the present invention, the lubricant composition can optionally comprise a second ashless dispersant. The second ashless dispersant can be any ashless dispersant as is well known in the art. Suitable materials for the second ashless dispersant include succinimides produced from polyalkenyl succinnic anhydrides and polyamines and Mannich base type dispersants made from alylated phenols, formaldehyde and polyamines are also useful.

Suitable materials for the second ashless dispersant includes hydrocarbyl succinimides, hydrocarbyl succinamides, mixed ester/amides of hydrocarbyl-substituted succinic acid, hydroxyesters of hydrocarbyl-substituted succinic acid, Mannich condensation products of hydrocarbyl-substituted phenols, formaldehyde and polyamines, condensation products of polyamines and hydrocarbyl substituted phenyl acids as well as combinations and mixtures thereof.

In a non-limiting embodiment of the invention, the second ashless dispersant is present in the lubricant composition in an amount less than or equal to 5 mass percent, or less than or equal to 3 mass percent, or less than or equal to 2 mass percent.

The present invention also encompasses the lubricant composition described above. The lubricant composition can be used to insulate and cool a transmission having at least one electromechanical component and at least one mechanical component in a single housing. Further, the present invention encompasses a transmission containing the lubricant composition described above.

The present invention further encompasses an additive package for the lubricant composition described above. The additive package comprises (a) an ashless dispersant (b) an oil soluble, phosphorus-containing compound and (c) a corrosion inhibitor.

### Examples

The present invention is illustrated by the following non-limiting examples. The examples in Table 1 below are theoretical examples of lubricant compositions according to the present invention. Table 1 shows the amount of each component in Exs. 1-8 as represented by mass percent in the finished lubricant.

**Table 1. Additive Packages for Lubricant Compositions of the Present Invention**

| | Ex. 1 | Ex. 2 | Ex. 3 | Ex. 4 | Ex. 5 | Ex. 6 | Ex. 7 | Ex. 8 |
|---|---|---|---|---|---|---|---|---|
| Dibutyl Hydrogen Phosphite | 0.030 | | | 0.100 | 0.075 | 0.050 | | |
| Triphenyl Phosphite | | 0.100 | | 0.100 | | | 0.200 | |
| TriLaurylTriThioPhosphite | | | 0.440 | | 0.220 | | | 0.250 |
| Hitec 4313 (Thiadiazole Corrosion Inhibitor) | 0.010 | | 0.020 | 0.025 | | | 0.010 | 0.010 |
| Tolyltriazole | | 0.050 | 0.030 | 0.025 | 0.050 | 0.010 | 0.010 | 0.010 |
| Infineum C9201 (PIBSA/PAM Dispersant) | | 0.500 | 0.250 | 2.000 | 1.500 | 3.000 | 1.000 | 1.500 |
| Irganox L-135 (Phenolic Anti-oxidant) | | | | | | 0.100 | 0.200 | 0.150 |
| ExxonMobil Solvent 100 Neutral Oil (37.1)* | 99.960 | | | | | 50.000 | 25.000 | 25.000 |
| Yubase 4 (40.5)* | | 99.350 | | | 98.155 | 46.840 | 25.000 | 48.080 |
| PAO 4 (37.8)* | | | 99.260 | | | | 48.580 | 25.000 |
| Phillips 66 Transformer Oil (39)* | | | | 97.850 | | | | |

| | | | | | | | | |
|---|---|---|---|---|---|---|---|---|
| *Values in parentheses are the Dielectric Breakdown Voltages @ 60 Hz according to ASTM D877 with disc electrodes in kVs | | | | | | | | |

In Table 1, ExxonMobil Solvent 100 Neutral Oil from ExxonMobil [Houston, TX], Yubase 4 from SK Corporation [Korea], and Group IV - Poly alpha olefins (PAO 4) are base oils according to the present invention; dibutyl hydrogen phosphite, triphenyl phosphite and trilauryltrithiophosphite are oil soluble, phosphorus-containing materials according to the present invention; and Hitec® 4313, a thiadiazole commercially available from Afton Chemical [Richmond, VA] and tolyltriazole are corrosion inhibitors according to the present invention.

As shown in Example 4, the additive package of the present invention can be added to commercial transformer oils such as Phillips 66 Transformer Oil.

## Claims

1. A method for lubricating a transmission having at least one electromechanical component and at least one mechanical component in a single housing comprising supplying to the transmission a lubricant composition comprising: (a) a base oil; (b) an oil soluble, phosphorus-containing material; and (c) a corrosion inhibitor.

2. The method according to claim 1 wherein the base oil has a dielectric strength greater than or equal to 30 KV as measured in accordance with ASTM D877.

3. The method according to claim 1 wherein the base oil is selected from the group consisting of natural lubricating oils, synthetic lubricating oils and mixtures thereof.

4. The method according to claim 3 wherein the base oil is a natural lubricating oil comprising a mineral oil.

5. The method according to claim 3 wherein the base oil is comprised of at least 50 mass percent of synthetic lubricating oil.

6. The method according to claim 1 wherein the oil soluble, phosphorus-containing material comprises an ester of an acid of phosphorus in a valence state of either III or V.

7. The method according to claim 6 wherein the oil soluble, phosphorus-containing material is a neutral compound.

8. The method according to claim 1 wherein the oil, soluble phosphorus-containing material is a mixed thio-alkyl phospiate.

9. The method according to claim 1 wherein the amount of phosphorus-containing material in the lubricant composition is less than or equal to 200 ppm.

10. The method according to claim 1 wherein the corrosion inhibitor is selected from the group consisting of triazoles and materials based on thiadiazoles as well as combinations and mixtures thereof.

11. The method according to claim 10 wherein the corrosion inhibitor comprises an aromatic triazole and a mercaptothiadiazole.

12. The method according to claim 1 wherein the corrosion inhibitor is present in an amount less than or equal to 0.5 weight percent of the composition.

13. The method according to claim 1 wherein the lubricant composition further comprises a second ashless dispersant

14. The method according to claim 13 wherein the second ashless dispersant is selected from the group consisting of (a) succinimides produced from polyalkenyl succinnic anhydrides and polyamines and (b) Mannich base type dispersants made from alylated phenols, formaldehyde and polyamines.

15. The method according to claim 13 wherein the second ashless dispersant is present in the lubricant composition in an amount less than or equal to 5 mass percent.

16. The method according to claim 1 wherein the mechanical components comprise at least one of the following: (1) reduction gearing; (2) differentials; (3) power splitting devices; and (4) torque limiting devices.

17. The method according to claim 1 wherein the electromechanical component comprises at least one of the following: (1) electric drive motors; (2) generators; (3) motor-generator combination units; and (4) alternators.

18. The method according to claims 1, wherein the transmission is included in a hybrid vehicle.

19. A lubricant composition comprising: (a) a base oil; (b) an oil soluble, phosphorus-containing material; and (c) a corrosion inhibitor, wherein the lubricant composition is used in a transmission having at least one electromechanical component and at least one mechanical component in a single housing.

20. A transmission containing the lubricant composition recited in claim 19.

21. An additive package for a lubricant composition comprising: (a) an ashless dispersant; (b) an oil soluble, phosphorus-containing material; and (c) a corrosion inhibitor.
